# EUROPÄISCHE PATENTSCHRIFT

(11) **EP 2 198 745 B1**
(45) Veröffentlichungstag und Bekanntmachung des Hinweises auf die Patenterteilung: **29.02.2012**
(21) Anmeldenummer: 08022017.1
(22) Anmeldetag: 18.12.2008
(51) Int. Cl.: A47B 87/00, E05B 63/12, F16B 12/20

(54) **Verbindungsmittel für eine Türzarge und Verfahren zum Verbinden von Bauteilen einer Türzarge**
Adhesive for a door frame and method for connecting components of a door frame
Moyen d'attache pour une huisserie de porte et procédé de liaison de composants d'une huisserie de porte

(43) Veröffentlichungstag der Anmeldung: 23.06.2010
(73) Patentinhaber: Klaus Borne Türenfabrik GmbH & Co. KG, 54311 Trierweiler (DE)
(72) Erfinder: Cremer, Norbert, 54318 Mertesdorf (DE)
(74) Vertreter: Wegner, Hans

(56) Entgegenhaltungen:
- EP-A- 1 989 956
- EP-A- 1 990 549

## Beschreibung

### 1. Technisches Gebiet

Die vorliegende Erfindung betrifft ein Verbindungsmittel für eine Türzarge und ein Verfahren zum Verbinden von Bauteilen einer Türzarge.

### 2. Stand der Technik

Aus dem Stand der Technik sind Verbindungsmittel zum Verbinden von Bauteilen, insbesondere zur Montage von Möbel- oder Maschinenteilen bekannt. Beispielsweise offenbart die EP 1 989 956 A2 ein solches Verbindungsmittel zum Verbinden eines ersten Bauteils und eines zweiten Bauteils, insbesondere für Möbel- oder Maschinenteile gemäß dem Oberbegriff des Anspruchs 1. Hierzu weisen die Verbindungselemente nichtselbstschneidende, gekrümmte Haltevorsprünge auf, sodass die Verbindungsmittel jeweils in eine im zugehörigen Bauteil vorgesehene Nut eingeschoben werden können. Die eingeschobenen Verbindungselemente werden daraufhin lösbar miteinander verbunden, wodurch auch die Bauteile verbunden werden. Durch die nicht-selbstschneidenden Haltevorsprünge soll eine Beschädigung der Bauteile beim Zusammenbau vermieden werden.

Aus der EP 1 990 549 A1 ist ebenfalls ein Verbindungsmittel zum Verbinden eines ersten Bauteils und eines zweiten Bauteils, insbesondere für Möbel- oder Maschinenteile, bekannt. Hierbei weist das erste Verbindungselement ein relativ zu einem Gehäuse bewegliches Halteelement auf, welches in einer Haltestellung so mit dem zweiten Verbindungselement zusammenwirkt, dass die Verbindungselemente lösbar miteinander verbunden sind. Das Bewegen des Halteelements von einer Freigabestellung in die Haltestellung kann durch ein mechanisches Betätigungselement erfolgen, welches von außerhalb des Verbindungselements mit dem Halteelement in Eingriff gebracht werden kann. Hierzu kann das Verbindungselement mit dem Halteelement eine Durchtrittsöffnung aufweisen, durch die das mechanische Betätigungselement eingebracht wird. Hierdurch wird ebenfalls eine Beschädigung der Bauteile beim Zusammenbau vermieden.

Ferner ist aus dem Werbeprospekt "*Clamex - der Lamello Verbinder*" der Firma Lamello AG ein Verbinder bekannt, der z.B. für den Einsatz in zerlegbaren Möbelverbindungen, Flächen-, Eck- und Mittelwandverbindungen oder Zargenkonstruktionen vorgesehen ist: Zargenkonstruktionen umfassen hierbei z.B. Tischzargen oder Möbelzargen.

Türrahmen, beispielsweise zum Anbringen von Haus- oder Innentüren, weisen typischerweise Zargenkonstruktionen auf, die durch die Eckpunkte der Türrahmenabschnitte gebildet werden. Beispielsweise ist aus der DE 299 21 904 U1 eine Türzarge bekannt, bei der die Einzelteile durch Blechwinkel miteinander verspannt sind, wobei die Blechwinkel mit den Zargenteilen fest verschraubt sind. Diese Türzargenkonstruktion hat jedoch den Nachteil, dass bei der Montage erhebliche Kräfte und insbesondere ein gewaltsames Verschieben des Blechwinkels relativ zu den Zargenteilen notwendig sind, wodurch die Gefahr einer Beschädigung der Türzarge besteht.

Deshalb ist es auch für Türzargen wünschenswert, ein Verbindungsmittel, wie es zum Beispiel aus dem zuvor genannten Stand der Technik für Möbelteile bekannt ist, bereitzustellen. Hierbei treten jedoch eine Reihe von konstruktionsbedingten Hindernissen auf, die einen Einsatz der bekannten Verbindungsmittel für Möbelteile in Türzargen verhindern. Beispielsweise wirken bei Türzargen auf die Zargenelemente um ein Vielfaches größere Zugkräfte als bei Möbelstücken, sodass die vorbekannten Verbindungsmittel für Möbelteile für den Einsatz in Türzargen ungeeignet sind.

Der vorliegenden Erfindung liegt deshalb das technische Problem zugrunde, ein Verbindungsmittel, wie es beispielsweise bei Möbelteilen zum Einsatz kommt, speziell für den Einsatz in Türzargen weiterzuentwickeln und somit die oben angesprochenen Nachteile zumindest zum Teil zu überwinden.

### 3. Zusammenfassung der Erfindung

Dieses Problem wird gemäß einem ersten Aspekt der Erfindung durch ein Verbindungsmittel für eine Türzarge nach Anspruch 1 gelöst. In einer Ausfiihrungsform weist das Verbindungsmittel ein erstes Verbindungselement zum Anordnen an einem ersten Bauteil der Türzarge und ein zweites Verbindungselement zum Anordnen an einem zweiten Bauteil der Türzarge auf, wobei die Verbindungselemente jeweils eine gekrümmte Anlagefläche zum Anordnen in einer gekrümmten Aussparung des zugehörigen Bauteils aufweisen und wobei das erste Verbindungselement zwei Öffnungen zur Aufnahme eines Betätigungsmittels aufweist, durch welches die Verbindungselemente lösbar miteinander verbunden werden können.

Das erste Verbindungselement des Verbindungsmittels weist darüber hinaus zwei gegenüberliegende Seitenwände auf, die senkrecht zu einer Anlegefläche des ersten Verbindungselements an das zweite Verbindungselement stehen, wobei die erste Öffnung an der ersten Seitenwand angeordnet ist und die zweite Öffnung an der gegenüberliegenden Seitenwand angeordnet ist.

Dadurch, dass das erste Verbindungselement zwei Öffnungen aufweist, die an gegenüberliegenden Seitenwänden des Verbindungselements angeordnet sind, wird eine beidseitige Bedienung des Verbindungsmittels ermöglicht. Dies hat den Vorteil dass, falls das Verbindungselement fälschlicherweise falsch herum in ein Türzargenbauteil eingebaut wurde, dieses trotzdem über die zweite Öffnung bedient werden kann. Im Stand der Technik hingegen ist bei Verbindungsmitteln für Möbelteile stets eine einseitige Bedienung vorgesehen, d.h. ein Eingriff eines mechanischen Betätigungselements in eines der Verbindungselemente ist nur von einer vorgegebenen Seite her möglich, was eine sorgfältige Handhabung beim Einbau erfordert. Wird das Verbindungselement fälschlicherweise verdreht eingebaut, kann das Betätigungselement nicht mit dem Halteelement des Verbindungselements in Eingriff gebracht werden, weshalb ein aufwändiges Auseinanderbauen und verdrehtes Wiedereinbauen der Bauteile erforderlich ist. Insbesondere bei Türzargen ist dies nicht wünschenswert, da bei Türzargen aufgrund der benötigten Stabilität typischerweise die Verbindungselemente mit den Türzargenbauteilen, beispielsweise durch Leim, verklebt werden. In diesem Fall ist das Ausbauen besonders schwierig oder gar unmöglich, ohne das Türzargenbauteil zu beschädigen und dadurch unbrauchbar zu machen. Die zwei Öffnungen können ferner zu einer einzigen, durch das Verbindungselement durchgehenden Öffnung, zusammengefasst sein.

In einem weiteren Aspekt können die gekrümmten Anlageflächen der Verbindungselemente des Verbindungsmittels auf einem gedachten Kreisbogen liegen, welcher einen Durchmesser von maximal 60mm aufweist. Die hierdurch erzielte bevorzugte Dimensionierung eines erfindungsgemäßen Verbindungsmittels wird nachfolgend in der detaillierten Beschreibung erläutert.

Ferner können die Verbindungselemente des Verbindungsmittels optisch unterscheidbar ausgebildet sein. Bevorzugt weisen die Verbindungselemente hierzu eine unterschiedliche Farbe auf, beispielsweise kann das erste Verbindungselement weiß und das zweite Verbindungselement schwarz sein. Eine farbliche Unterscheidbarkeit ist jedoch nur ein mögliches Beispiel von vielen für eine optische Unterscheidbarkeit. Durch die optische Unterscheidbarkeit der Verbindungselemente wird eine Verwechslung beim Einbau vermieden und ferner die Bebilderung in der Montageanleitung erleichtert, was die Handhabung des Verbindungsmittels bei der Montage verbessert.

In einem weiteren Aspekt kann eine Bedienrichtung des Betätigungsmittels auf zumindest einem der Verbindungselemente des Verbindungsmittels gekennzeichnet sein. Die Kennzeichnung dient der "Verdrehsicherung", d.h. der Kennzeichnung der Hauptbedienrichtung, z.B. "rechtsdrehend" in Text-, Symbol-, oder einer anderen Form, was insbesondere aufgrund der beidseitigen Bedienbarkeit von Vorteil ist. Ferner wird hierdurch die Bebilderung in der Montageanleitung erleichtert werden, wodurch die Handhabung verbessert wird. Zusätzlich oder alternativ zur Hauptbedienrichtung kann ebenso das benötigte Bedienwerkzeug, d.h. dessen Art und/oder Größe, oder jegliche weitere für die Montage erforderliche Information gekennzeichnet werden. Die Kennzeichnung kann beispielsweise auf dem Verbindungselement aufgezeichnet, aufgedruckt, aufgeprägt (z.B. ca. 0,1 mm vertieft oder hervorstehend) oder in anderer Art und Weise angebracht sein.

In einem weiteren Aspekt können die Verbindungselemente des Verbindungsmittels im verbundenen Zustand nachjustiert werden, um die Türzarge in einen Türstock einpassen zu können. Hierzu kann bevorzugt zumindest eines der Verbindungselemente des Verbindungsmittels mindestens einen Einsteckvorsprung mit glatter Oberfläche aufweisen. Zumindest das andere Verbindungselement des Verbindungsmittels kann mindestens eine Aussparung zur Aufnahme des Einsteckvorsprungs aufweisen. Dadurch, dass die Einsteckvorsprünge eine glatte Oberfläche, insbesondere ohne eine Riffelung, aufweisen, sowie dass die Aussparungen beispielsweise geringfügig größer als die Einsteckvorsprünge dimensioniert sind, ist ein Nachjustieren, d.h. z.B. seitliches Verschieben der Verbindungselemente zueinander im verbundenen Zustand möglich. Bei den vorbekannten Verbindungsmitteln für Möbelstücke hingegen ist typischerweise eine möglichst exakte, vorgegebene Verbindung der Möbelbauteile gewünscht, d.h. eben kein Nachjustieren.

Ferner kann zumindest eines der Verbindungselemente des Verbindungsmittels mindestens einen Haltevorsprung entlang einer der Seitenwände des Verbindungselements aufweisen, wobei der Haltevorsprung eine Breite von mehr als 2mm aufweist. Dies ermöglicht insbesondere bei Türzargen eine stabile Konstruktion sowie eine einfachere Fertigung. Die Haltevorsprünge der vorbekannten Verbindungselemente sind dahingegen speziell für Möbelstücke konzipiert. Bei Türzargen entstehen jedoch vergleichsweise hohe Zugkräfte zwischen den Bauteilen, sodass die vorbekannten Verbindungsmittel eine unzureichende Stabilität für den Einsatz in Türzargen aufweisen.

Die vorliegende Erfindung betrifft ferner ein Verfahren zum Verbinden eines ersten und eines zweiten Bauteils einer Türzarge durch eines der oben beschriebenen Verbindungsmittel, wobei das Verfahren die folgenden Schritte aufweist:
a. Anordnen des ersten Verbindungselements am ersten Bauteil der Türzarge und Anordnen des zweiten Verbindungselements am zweiten Bauteil der Türzarge;
b. Herstellen einer lösbaren Verbindung der Verbindungselemente durch das Betätigungsmittel; wobei
c. das Betätigungsmittel in eine Öffnung des ersten Verbindungselements an einer der Sichtseite der Türzarge abgewandten Seitenwand des ersten Verbindungselements eingeführt wird.

Im Gegensatz zum oben beschrieben erfindungsgemäßen Verfahren liegt bei Verbindungsmitteln für Möbelteile die Öffnung stets auf der Innenseite des Möbelstücks, d.h. auf derjenigen Seite, an der die zu verbindenden Bauteile den kleineren Winkel einschließen. Bei Türzargen ist diese Seite jedoch, anders als bei Möbelstücken, die Sichtseite, weshalb die nach dem Zusammenbau der Türzarge verbleibende Öffnung die Ästhetik start beeinträchtigt würde. Die vorliegende Erfindung ermöglicht eine Bedienung des Verbindungsmittels von der Außenseite der Türzarge her, wodurch die Sichtseite der Türzarge bei der Montage unversehrt bleibt.

### 4. Kurze Beschreibung der Zeichnungen

Im Folgenden werden bevorzugte Ausführungsbeispiele der vorliegenden Erfindung unter Bezugnahme auf die begleitenden Figuren erläutert:
- Fig. 1:: Schematische Darstellung der Schrägansicht eines Verbindungsmittels für Türzargen gemäß einem Ausführungsbeispiel der vorliegenden Er- findung;
- Fig. 2:: Schematische Darstellung der Schrägansicht eines Verbindungsmittels für Türzargen gemäß einem Ausführungsbeispiel der vorliegenden Er- findung, wobei die Verbindungselemente transparent dargestellt sind;
- Fig.3a:: Schematische Darstellung eines Türstocks mit einer Türzarge und deren Bauteilen;
- Fig. 3b:: Schematische Darstellung eines Ausschnitts einer Türzarge mit einge- bautem Verbindungsmittel gemäß einem Ausführungsbeispiel der vor- liegenden Erfindung und Bedienrichtung;
- Fig. 4:: Schematische Darstellung der Seitenansicht eines Verbindungsele- ments gemäß einem Ausführungsbeispiel der vorliegenden Erfindung und dessen Abmessungen;
- Fig. 5:: Schematische Darstellung eines Verbindungsmittels für Türzargen gemäß einem Ausführungsbeispiel der vorliegenden Erfindung mit farblich unterscheidbaren Verbindungselementen;
- Fig. 6:: Schematische Darstellung eines Verbindungselements gemäß einem Ausführungsbeispiel der vorliegenden Erfindung mit Kennzeichnung der Hauptbedienrichtung; und
- Fig. 7:: Schematische Darstellung der Draufsicht eines Verbindungselements gemäß einem Ausführungsbeispiel der vorliegenden Erfindung mit Haltevorsprüngen und deren Abmessungen.

### 5. Detaillierte Beschreibung von bevorzugten Ausführungsformen

Im Folgenden werden gegenwärtig bevorzugte Ausführungsbeispiele eines erfindungsgemäßen Verbindungsmittels für Türzargen genauer erläutert.

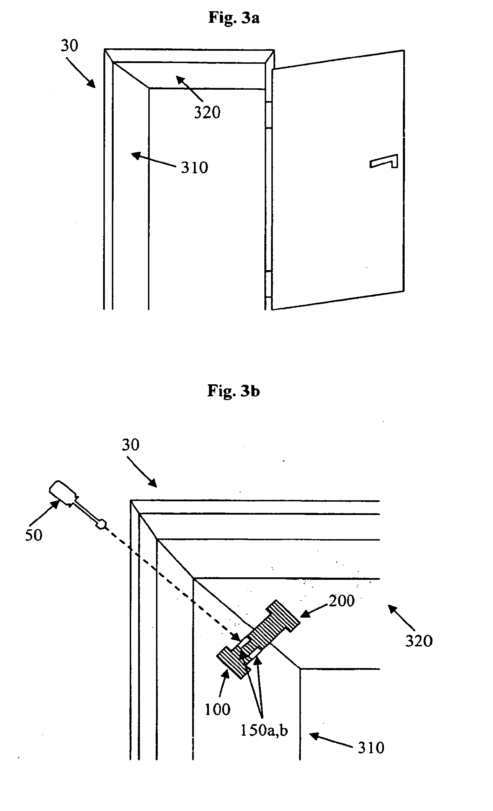

Ein solches Verbindungsmittel kann in einer in Fig. 3a gezeigten Türzarge 30 eingebaut werden. Die Türzarge 30 umfasst hierbei zwei Bauteile 310, 320, die bevorzugt rechtwinklig angeordnet werden. Wie aus Fig. 3a ersichtlich ist, umfasst ein Türstock somit typischerweise zwei erfindungsgemäße Verbindungsmittel.

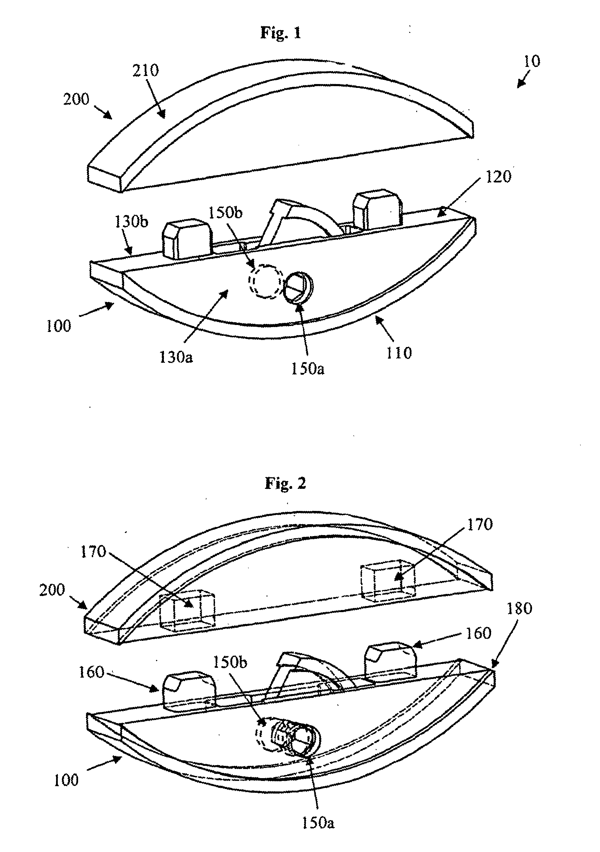

Fig. 1 zeigt schematisch eine Schrägansicht eines erfindungsgemäßen Verbindungsmittels 10, das zwei Verbindungselemente 100, 200 umfasst. Beide Verbindungselemente 100, 200 weisen gekrümmte Anlageflächen 110, 210 auf, die dazu dienen, die Verbindungselemente 100, 200 in gekrümmte Aussparungen der zugehörigen Bauteile 310, 320 (in Fig. 1 nicht dargestellt) einer Türzarge 30 einzusetzen. Wie aus Fig. 1 ersichtlich, weist das erste Verbindungselement 100 zwei Öffnungen 150a, 150b auf, die auf gegenüberliegenden Seitenwänden 130a, 130b des ersten Verbindungselements 100 angeordnet sind. Insbesondere zeigt Fig. 2, dass die in Fig. 1 verdeckte zweite Öffnung 150b an der zweiten Seitenwand 130b gegenüber der ersten Öffnung 150a an der ersten Seitenwand 130a angeordnet ist. Insbesondere können die Öffnungen 150a, 150b hierbei zu einer einzigen Öffnung zusammengefasst, d.h. durch das erste Verbindungselement 110 durchgehend, ausgestaltet sein. Die Öffnungen können beispielsweise einen Durchmesser von 5 mm aufweisen.

Fig. 2 zeigt ferner, dass auf dem ersten Verbindungselement 100 zwei Einsteckvorsprünge 160 angeordnet sind und das zweite Verbindungselement 200 zwei Aussparungen 170 zur Aufnahme der Einsteckvorsprünge 160 aufweist. Dies erhöht die Stabilität des Verbindungsmittels 10 im verbundenen Zustand der Verbindungsmittel 100, 200. Wie aus Fig. 2 ersichtlich, weisen die Einsteckvorsprünge 160 eine glatte Oberfläche auf, wodurch ein Nachjustieren der Verbindungselemente 100, 200 im verbundenen Zustand ermöglicht wird. Die Form der Einsteckvorsprünge 160 jedoch kann von der in Fig. 2 dargestellten Ausführungsform abweichen.

Im verbundenen Zustand liegen die Verbindungselemente 100, 200 an ihren Anlegeflächen 120 aneinander. In Fig. 3b, die einen Ausschnitt einer Türzarge 30 aus Fig. 3a darstellt, sind die Verbindungselemente 100, 200 in verbundenem Zustand in einer Draufsicht auf ihre Schmalseite abgebildet. Hierbei wird insbesondere die Bedienrichtung eines Betätigungsmittels 50 deutlich. Das Betätigungsmittel 50 wird demnach von der Außenseite der Türzarge 30 her in das Verbindungselement 100, bzw. in eine dessen Öffnungen 150a, 150b, eingeführt. Hierdurch bleibt die Sichtseite der Türzarge 30, d.h. die Seite, auf der die Bauteile 310, 320 den kleineren Winkel einschließen, unversehrt.

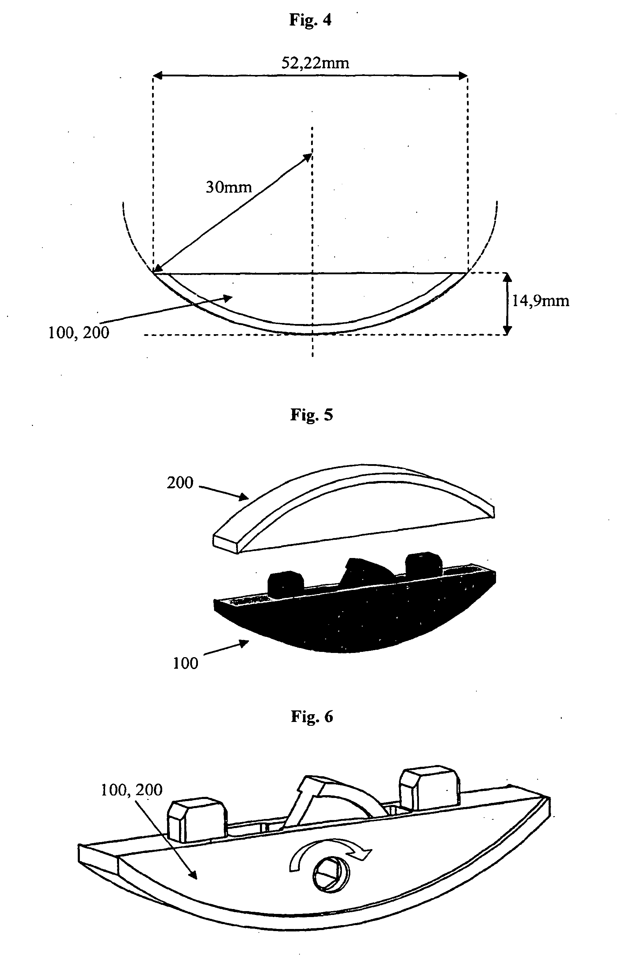

Wie aus Fig. 4 ersichtlich ist, liegt die gekrümmte Anlagefläche 110, 210 der Verbindungselemente 100, 200 auf einem gedachten Kreisbogen (in Fig. 4 gestrichelt dargestellt), der vorzugsweise einen Durchmesser vom 60 mm (d.h. einen Radius von 30 mm) aufweist. Im in Fig. 4 gezeigten Ausführungsbeispiel beträgt dadurch die Breite der Verbindungselemente 100, 200 ca. 50 mm und die Höhe ca. 15 mm. Jedoch sind andere Dimensionierungen denkbar, beispielsweise ein Durchmesser von 50 mm anstatt 60 mm. Ein Durchmesser von 50 mm hat den Vorteil, dass das Verbindungsmittel 10 näher an der Zargenvorderkante der Türzarge 30 eingesetzt werden kann, sowie dass es in 70er-Zargen verwendet werden kann. Der Durchmesser von 60 mm hat den Vorteil, dass ein zur Herstellung des Verbindungsmittels 10 vorgesehenes Fräswerkzeug aufgrund seiner Schnittgeschwindigkeit für derartige Durchmesser besonders geeignet ist. Ferner hat eine Türzarge 30 bei einem Durchmesser der Verbindungselemente 100, 200 von 60 mm eine höhere Stabilität und Zugbruchfestigkeit. Bei einem erhöhten Bedarf nach 70er-Zargen (die üblicherweise einen relativ geringen Anteil ausmachen) könnte an der Frässpindel des Fräswerkzeugs ein zweites Werkzeug mit kleinerem oder anderem Durchmesser angebracht werden, welches durch Verschieben in einer Achse angefahren werden könnte. Weitere Dimensionen eines erfindungsgemäßen Verbindungsmittels 10 ohne Anspruch auf Vollständigkeit sind: eine Dicke von ca. 12 mm oder 6-7 mm, sowie eine Breite von ca. 50-70 mm.

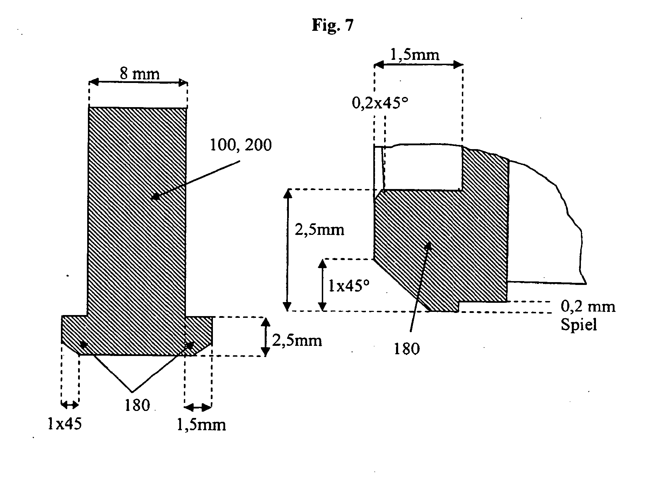

In der in Fig. 2 gezeigten Ausführungsform weisen die Verbindungselemente 100, 200 ferner Haltevorsprünge 180 entlang der Seitenwände 130a, 130b auf, die insbesondere in der Seitenansicht in Fig. 7 deutlich zu sehen sind. Die Haltevorsprünge 180 weisen bevorzugt eine Breite von mehr als 2 mm, z.B. 2,5 mm (wie dargestellt) oder 3mm auf, um eine ausreichende Stabilität für den Einsatz in Türzargen zu ermöglichen. Die Haltevorsprünge 180 stehen ferner bevorzugt ca. 1,5 mm von dem entsprechenden Verbindungselement 100, 200 ab (siehe Fig. 7). Dementsprechend können die gekrümmten Aussparungen der Bauteile 310, 320 der Türzarge 30 Nuten aufweisen, in denen die Haltevorsprünge 180 der Verbindungselemente 100, 200 angeordnet werden. Die Nuten der Bauteile 310, 320 der Türzarge 30 können ferner einen Nutgrund mit Fase 1,5 mm aufweisen, was unter anderem der Standzeitenoptimierung der eingesetzten Fräswerkzeuge dienen kann.

Fig. 5 zeigt eine Ausführungsform des Verbindungsmittels 10, in dem das erste Verbindungsmittel 100 schwarz eingefärbt und das zweite Verbindungsmittel 200 weiß eingefärbt ist. Dies dient zur leichteren Unterscheidbarkeit der Verbindungsmittel, wodurch eine erleichterte Handhabung bei der Montage ermöglicht wird. Ferner zeigt Fig. 6, dass auf einem Verbindungselemente 100, 200 Hinweise angebracht werden können, die beispielsweise die Hauptbedienrichtung des Betätigungsmittels 50 symbolisieren (in Fig. 6 durch den halbrunden Pfeil dargestellt). Das erfindungsgemäße Verbindungsmittel 10 ist bevorzugt so ausgelegt, dass als Betätigungsmittel ein Sechskant-4mm-Inbusschlüssel zum Einsatz kommen kann. Die weite Verbreitung derartiger Inbusschlüssel macht den Einsatz von Spezialwerkzeug unnötig.

## Patentansprüche

1. Verbindungsmittel (10) für eine Türzarge (30), aufweisend:
a. ein erstes Verbindungselement (100) zum Anordnen an einem ersten Bauteil (310) der Türzarge (30) und ein zweites Verbindungselement (200) zum Anordnen an einem zweiten Bauteil (320) der Türzarge (30);
b. wobei die Verbindungselemente (100, 200) jeweils eine gekrümmte Anlagefläche (110, 210) zum Anordnen in einer gekrümmten Aussparung des zugehörigen Bauteils (310, 320) aufweisen;
c. wobei das erste Verbindungselement (100) zwei Öffnungen (150a, 150b) zur Aufnahme eines Betätigungsmittels (50) aufweist, durch welches die Verbindungselemente (100, 200) lösbar miteinander verbunden werden können, wobei das erste Verbindungselement (100) zwei gegenüberliegende Seitenwände (130a, 130b) aufweist, die senkrecht zu einer Anlegefläche (120) des ersten Verbindungselements (100) an das zweite Verbindungselement (200) stehen und wobei die erste Öffnung (150a) zur Aufnahme eines Betätigungsmittels (50) an der ersten Seitenwand (130a) angeordnet ist;
**dadurch gekennzeichnet, dass**
d. die zweite Öffnung (150b) zur Aufnahme eines Betätigungsmittels (50) an der gegenüberliegenden Seitenwand (130b) des ersten Verbindungselements (100) angeordnet ist.

2. Verbindungsmittel (10) nach dem vorhergehenden Anspruch, wobei die gekrümmten Anlageflächen (110, 210) der Verbindungselemente (100, 200) auf einem gedachten Kreisbogen liegen, welcher einen Durchmesser von maximal 60mm aufweist.

3. Verbindungsmittel (10) nach einem der vorhergehenden Ansprüche, wobei die Verbindungselemente (100, 200) optisch unterscheidbar ausgebildet sind.

4. Verbindungsmittel (10) nach einem der vorhergehenden Ansprüche, wobei eine Bedienrichtung des Betätigungsmittels (50) auf zumindest einem der Verbindungselemente (100, 200) **gekennzeichnet** ist.

5. Verbindungsmittel (10) nach einem der vorhergehenden Ansprüche, wobei die Verbindungselemente (100, 200) im verbundenen Zustand nachjustiert werden können.

6. Verbindungsmittel (10) nach Anspruch 5, wobei zumindest eines der Verbindungselemente (100, 200) mindestens einen Einsteckvorsprung (160) mit glatter Oberfläche aufweist und wobei zumindest das andere Verbindungselement (100, 200) mindestens eine Aussparung (170) zur Aufnahme des Einsteckvorsprungs (160) aufweist.

7. Verbindungsmittel (10) nach einem der vorhergehenden Ansprüche, wobei zumindest eines der Verbindungselemente (100, 200) mindestens einen Haltevorsprung (180) entlang einer der Seitenwände (130a, 130b) aufweist, wobei der Haltevorsprung (180) eine Breite von mehr als 2mm aufweist.

8. Verfahren zum Verbinden eines ersten (310) und eines zweiten (320) Bauteils einer Türzarge (30) durch ein Verbindungsmittel (10) nach einem der vorhergehenden Ansprüche, wobei das Verfahren die folgenden Schritte aufweist:
a. Anordnen des ersten Verbindungselements (100) am ersten Bauteil (310) der Türzarge (30) und Anordnen des zweiten Verbindungselements (200) am zweiten Bauteil (320) der Türzarge (30);
b. Herstellen einer lösbaren Verbindung der Verbindungselemente (100, 200) durch das Betätigungsmittel (50); wobei
c. das Betätigungsmittel (50) in eine Öffnung (150a, 150b) des ersten Verbindungselements (100) an einer der Sichtseite der Türzarge (30) abgewandten Seitenwand (130a, 130b) des ersten Verbindungselements (100) eingeführt wird.

## Claims

1. A connecting means (10) for a door frame (30), comprising:
a. a first connecting element (100) for being arranged at a first component (310) of the door frame (30) and a second connecting element (200) for being arranged at a second component (320) of the door frame (30);
b. wherein the connecting elements (100, 200) each comprise a curved bearing surface (110, 210) for being arranged within a curved recess of the respective component (310, 320);
c. wherein the first connecting element (100) comprises two openings (150a, 150b) for receiving an actuating means (50) for releasably connecting the connecting elements (100, 200) with each other, wherein the first connecting element (100) comprises two opposing side walls (130a, 130b) arranged perpendicular to a bearing surface (120) of the first connecting element (100) with respect to the second connecting element (200), and wherein the first opening (150a) for receiving an actuating means (50) is arranged at the first side wall (130a);
**characterized in that**
d. the second opening (150b) for receiving an actuating means (50) is arranged at the opposing side wall (130b) of the first connecting element (100).

2. The connecting means (10) according to the preceding claim,
wherein the curved bearing surfaces (110, 210) of the connecting elements (100, 200) are arranged on an imaginary circular arc comprising a maximum diameter of 60 mm.

3. The connecting means (10) according to any of the preceding claims, wherein the connecting elements (100, 200) are optically distinguishable from each other.

4. The connecting means (10) according to any of the preceding claims, wherein an operating direction of the actuating means (50) is marked on at least one of the connecting elements (100, 200).

5. The connecting means (10) according to any of the preceding claims, wherein the connecting elements (100, 200) can be readjusted in the connected state.

6. The connecting means (10) according to claim 5, wherein at least one of the connecting elements (100, 200) comprises at least one plug projection (160) having a smooth surface, and wherein at least the other connecting element (100, 200) comprises at least one recess (170) for receiving the plug projection (160).

7. The connecting means (10) according to any of the preceding claims, wherein at least one of the connecting elements (100, 200) comprises at least one holding projection (180) along one of the side walls (130a, 130b), wherein the holding projection (180) comprises a width of more than 2 mm.

8. A method for connecting a first (310) and a second (320) component of a door frame (30) by means of a connecting means (10) in accordance with one of the preceding claims, wherein the method comprises the following steps:
a. arranging the first connecting element (100) at the first component (310) of the door frame (30) and arranging the second connecting element (200) at the second component (320) of the door frame (30);
b. creating a releasable connection of the connecting elements (100, 200) by means of the actuating means (50); wherein
c. the actuating means (50) is inserted into an opening (150a, 150b) of the first connecting element (100) at a side wall (130a, 130b) of the first connecting element (100) facing away from the visible side of the door frame (30).

## Revendications

1. Moyen de liaison (10) pour une huisserie de porte (30), comprenant :
a. un premier élément de liaison (100) destiné à être disposé sur un premier composant (310) de l'huisserie de porte (30), et un second élément de liaison (200) destiné à être disposé sur un second composant (320) de l'huisserie de porte (30) ;
b. les éléments de liaison (100, 200) comportant chacun une surface d'appui incurvée (110, 210) destinée à être disposée dans une échancrure incurvée du composant associé (310, 320) ;
c. le premier élément de liaison (100) présentant deux orifices (150a, 150b) destinés à recevoir un moyen d'actionnement (50) par lequel les éléments de liaison (100, 200) sont aptes à être reliés l'un à l'autre de façon détachable, le premier élément de liaison (100) comprenant deux parois latérales opposées (130a, 130b) qui sont perpendiculaires à une surface d'appui (120) du premier élément de liaison (100) contre le second élément de liaison (200), le premier orifice (150a) destiné à recevoir un moyen d'actionnement (50) étant disposé sur la première paroi latérale (130a) ;
**caractérisé en ce que**
d. le second orifice (150b) destiné à recevoir un moyen d'actionnement (50) est disposé sur la paroi latérale opposée (130b) du premier élément de liaison (100).

2. Moyen de liaison (10) selon la revendication précédente, dans lequel les surfaces d'appui (110, 210) incurvées des éléments de liaison (100, 200) se situent sur un arc de cercle imaginaire qui présente un diamètre de 60 mm au maximum.

3. Moyen de liaison (10) selon l'une des revendications précédentes, dans lequel les éléments de liaison (100, 200) sont réalisés de manière à pouvoir être distingués visuellement.

4. Moyen de liaison (10) selon l'une des revendications précédentes, dans lequel un sens de manoeuvre du moyen d'actionnement (50) est marqué sur l'un au moins des éléments de liaison (100, 200).

5. Moyen de liaison (10) selon l'une des revendications précédentes, dans lequel les éléments de liaison (100, 200) sont capables d'être réajustés, dans l'état relié.

6. Moyen de liaison (10) selon la revendication 5, dans lequel l'un au moins des éléments de liaison (100, 200) comprend au moins une saillie enfichable (160) à surface lisse, et dans lequel l'autre au moins des éléments de liaison (100, 200) présente au moins une échancrure (170) destinée à recevoir la saillie enfichable (160).

7. Moyen de liaison (10) selon l'une des revendications précédentes, dans lequel l'un au moins des éléments de liaison (100, 200) comprend au moins une saillie de maintien (180) le long de l'une des parois latérales (130a, 130b), la saillie de maintien (180) présentant une largeur de plus de 2 mm.

8. Procédé de liaison d'un premier composant (310) et d'un second composant (320) d'une huisserie de porte (30) par un moyen de liaison (10) selon l'une des revendications précédentes, le procédé comprenant les étapes suivantes :
a. on agence le premier élément de liaison (100) sur le premier composant (310) de l'huisserie de porte (30), et on agence le second élément de liaison (200) sur le second composant de liaison (320) de l'huisserie de porte (30) ;
b. on établit une liaison détachable des éléments de liaison (100, 200) par le moyen d'actionnement (50) ;
c. en introduisant le moyen d'actionnement (50) dans un orifice (150a, 150b) du premier élément de liaison (100) sur une paroi latérale (130a, 130b), détournée de la face visible de l'huisserie de porte (30), du premier élément de liaison (100).
